(19) Europäisches Patentamt / European Patent Office / Office européen des brevets

(11) **EP 4 145 402 A1**

(12) **EUROPEAN PATENT APPLICATION**

(43) Date of publication:
**08.03.2023 Bulletin 2023/10**

(51) International Patent Classification (IPC):
**G06V 10/82** $^{(2022.01)}$ **G06N 3/04** $^{(2006.01)}$
**G06V 20/00** $^{(2022.01)}$ **G06V 10/25** $^{(2022.01)}$

(21) Application number: **21194957.3**

(22) Date of filing: **06.09.2021**

(52) Cooperative Patent Classification (CPC):
**G06V 10/82; G06N 3/045; G06V 10/25; G06V 20/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventor: **Pototzky, Daniel**
**31141 Hildesheim (DE)**

(54) **DEVICE AND METHOD FOR TRAINING A NEURAL NETWORK FOR IMAGE ANALYSIS**

(57) Computer-implemented method for training a neural network (70), wherein the neural network (70) is configured for image analysis and wherein training comprises the steps of:
• Determining a first feature map ($f_1$) by the neural network (70) based on a first transformed image ($x_{a_1}$), wherein the first transformed image ($x_{a_1}$) is determined based on a first transformation of a training image ($x_i$);
• Determining a second feature map ($f_2$) by the neural network (70) based on a second transformed image ($x_{a_2}$), wherein the second transformed image ($x_{a_2}$) is determined based on a second transformation of the training image ($x_i$);
• Determining a first loss value characterizing a metric between a first feature vector of the first feature map ($f_1$) and a weighted sum of second feature vectors of the second feature map ($f_2$), wherein weights of the weighted sum are determined according to overlaps of a part of the training image ($x_i$) characterized by the first feature vector with respect to parts of the training image ($x_i$) characterized by the respective second feature vectors;
• Training the neural network (70) based on the first loss value.

Fig. 1

EP 4 145 402 A1

## Description

Technical field

Prior art

Chen and He "Exploring Simple Siamese Representation Learning", Nov. 20th, 2020, https://arxiv.org/abs/2011.10566v1 discloses a SimSiam neural network for unsupervised learning.

Technical background

Neural networks for image analysis find various applications in almost all fields of technology. Especially deep neural networks achieve prediction performances than typically outperform other machine learning-based approaches.

However, training neural networks, especially deep neural networks, to achieve such superior performances comes at a cost of requiring a substantial amount of annotated training images with which the neural network can be trained. Annotating such training images is a time-intensive and costly endeavor.

A common approach is hence to pretrain the neural network with unlabeled training data in a self-supervised learning approach. This pretraining allows for reducing the necessary amount of annotated images while still being able to achieve a high prediction performance.

A known class of models for self-supervised learning are SimSiam neural networks. For training a SimSiam neural network, a respective feature representation for two transformations of an image is determined and the SimSiam neural network is trained to determine similar outputs for the two transformations.

The inventors found, however, that the SimSiam approach is suboptimal when a downstream task of the neural network is to classify objects or perform a semantic segmentation as the SimSiam network is configured to determine a global feature representation of an entire image.

Disclosure of the invention

Given this background, the invention concerns in a first aspect a computer-implemented method for training a neural network, wherein the neural network is configured for image analysis and wherein training comprises the steps of:

- Determining a first feature map by the neural network based on a first transformed image, wherein the first transformed image is determined based on a first transformation of a training image;
- Determining a second feature map by the neural network based on a second transformed image, wherein the second transformed image is determined based on a second transformation of the training image;
- Determining a first loss value characterizing a metric between a first feature vector of the first feature map and a weighted sum of second feature vectors of the second feature map, wherein weights of the weighted sum are determined according to overlaps of a part of the training image characterized by the first feature vector with respect to parts of the training image characterized by the respective second feature vectors;
- Training the neural network based on the first loss value.

The neural network may be understood as a data processing device that takes as input an input signal characterizing an image and determines an output signal characterizing an analysis of the image.

The image may especially be obtained from an optical sensor, e.g., a camera, a LIDAR sensor, a radar sensor, an ultrasonic sensor, or a thermal camera.

The analysis may, for example, characterize a classification of the image, e.g., a multiclass classification, a multi-label classification, a semantic segmentation, or an object detection. Alternatively or additionally, the analysis may also characterize a regression result, i.e., the result of performing a regression analysis based on the image. The analysis may also determine a probability or a likelihood or a log-likelihood as result, e.g., in case the neural network is a normalizing flow.

The input of the neural network may preferably be given in the form of a three-dimensional tensor. The tensor may characterize a width and height of the image by a width dimension and height dimension of the tensor respectively. Additionally, the tensor may characterize the number of channels of the image in a channel dimension, which can also be referred to as depth dimension.

The image may be processed by layers of the neural network, wherein a layer, e.g., a convolutional layer, determines a feature map as output for an input of the layer. A feature map may also be characterized by a three-dimensional tensor, wherein the depth dimension preferably characterizes the number of filters of the convolutional layer. As the layers of the neural network form a path along which information from the input (i.e., the image) flows to an output of the neural network, a feature map may be understood as capturing information about parts of the image. A feature map may further be understood as comprising feature vectors along the depth dimension of the tensor characterizing the feature map, wherein the feature vectors are indexed by the width dimension and height dimension of the tensor. As a convolutional layer has a certain receptive field with respect to the image, a feature vector of a feature map output by a convolutional layer may be understood as characterizing a part of the image with its center at a relative position in the image equal to a relative position of the feature vector along the height and width dimension in the tensor and with an extension of the receptive field of the convolutional layer. In other words, a feature vector can be understood as characterizing a distinct part of the image.

By presenting the neural network with different transformations of the training image, the neural network learns what parts of the image constitute similar or equal objects under the first transformation and/or second transformation. The inventors found that this advantageously improves the performance of the neural network as it does not learn similarities of images but parts of images, e.g., objects. The neural network is hence able to determine more fine-grained similarities in the training image than simply the global image. The inventors further found that especially when using the neural network in a downstream task, e.g., for finetuning, the performance of the model on the downstream task is improved by the proposed method.

The first transformation and second transformation can especially be chosen such that a mapping from pixel locations of the training image to pixels of the first transformed image and second transformed image respectively is known. This way, there exists a clear connection between a first feature vector and the part of the training image it characterizes as well as between a second feature vector and the part of the training image it characterizes.

Preferably the first transformation and the second transformation characterize a respective augmentation of the training image. Common augmentation methods for an image are flipping, cropping, rotating, shearing, or adapting colors of the image, e.g., by means of gamma correction or grey scale conversion. The first transformation and/or the second transformation may also characterize a plurality of augmentations, e.g., by transforming the image according to a pipeline of different augmentations.

Preferably a weight of the weighted sum characterizes an intersection over union of the part of the training image characterized by the first feature vector and a part of the training image characterized by a second feature vector.

As there exists a one-to-one relationship between the first feature vector and a part of the training image as well as one-to-one relationships between second feature vectors and respective parts of the training image, one can directly determine the part of the training image the first feature vector corresponds to as well as the part a second feature vector corresponds to. Hence, a weight of for the second feature vector for use in the weighted sum can directly be obtained by determining an intersection over union of the part of the training image corresponding to the first feature vector and the part of the image corresponding to the second feature vector. Preferably, this procedure can be conducted for all second feature vectors, thereby determining weights for all second feature vectors.

In a preferred embodiment, it is also possible that the first loss value is set to zero if a sum of overlaps of the part of the training image characterized by the first feature vector with respect to the parts of the training image characterized by the respective second feature vectors is less than or equal to a predefined threshold.

The inventors found that this can be advantageous as in case the first feature vector characterizes a part of the training image that is too small in order to infer meaningful information about the object located in the part of the training image. For example, the first transformation may be chosen randomly from a plurality of possible transformations, wherein there is a non-zero chance that the first transformation results in a first transformed image that only covers too small an area of the training image in order to infer meaningful information. The size from which on a part of the training image characterized by the first feature vector is considered to be too small to infer meaningful information can be provided to the method in terms of a predefined threshold. In other words, the size from which on the part of the training image is too small to infer meaningful information can be understood as a hyperparameter of the method. The inventors found that tuning this hyperparameter advantageously leads to an increase in performance of the neural network.

Preferably, the neural network comprises an encoder and a predictor, wherein the second feature map is a second output of the encoder for the second transformed image and the first feature map is an output of the predictor determined for a first output of the encoder for the first transformed image.

The encoder and predictor may both be understood as neural networks within the neural network, i.e., sub-neural networks of the neural network. Preferably, the encoder comprises a plurality of convolutional layers organized in the form of a convolutional neural network, e.g., a residual neural network. Given a transformed image, the convolutional neural network determines a feature map, which is preferably used as input of a 1x1 convolutional layer or a plurality of 1x1 convolutional layers stacked sequentially with non-linear activation functions in between the 1x1 convolutional layers. The output of this 1x1 convolutional layer or the stack of 1x1 convolutional layers is again a feature map. That means that providing the second transformed image to the encoder, the second feature map can be determined by forwarding the second transformed image through the convolutional neural network of the encoder and the 1x1 convolutional layer or 1x1 convolutional layers.

Similarly, an output for the first transformed image can be determined this way. However, in order to avoid mode collapse, the output for the first transformed image may then be forwarded through the predictor in order to determine the first feature map. The predictor may comprise a 1x1 convolutional layer. Preferably the predictor may comprise a plurality of 1x1 convolutional layers stacked sequentially with non-linear activation functions in between the 1x1 convolutional layers.

The inventors found that the approach of using an encoder and predictor configured according to the specification above allows for reducing mode collapse when training the neural network, which leads to an even bigger increase in performance.

Preferably, a first loss is determined for each first feature vector from a plurality of first feature vectors of the first feature map, thereby determining a plurality of first loss values.

The neural network may then be trained based on a sum of the plurality of first loss values or a mean of the plurality of first loss value by means of a gradient descent algorithm, wherein gradients of parameters of the neural network are determined with respect to the first loss value or with respect to the sum of the plurality of first loss values or with respect to the mean of the plurality of first loss values. Advantageously, this allows the neural network to learn about different objects in the image.

Preferably, a gradient of the first loss value with respect to a second feature vector or a gradient of the sum of the plurality of first loss values with respect to a second feature vector or a gradient of the mean of the plurality of first loss values with respect to a second feature vector is not backpropagated through the neural network. In other words, a stop-grad operation may be inserted into training the neural network with respect to backpropagating gradients with respect to the second feature map. The inventors found that not backpropagating a gradient with respect to a second feature vector allows for further reducing mode collapse in the neural network.

In another aspect, the invention concerns a computer-implemented method for determining a control signal of an actuator, wherein the control signal is determined based on an output signal of the neural network. In other words, the neural network may be trained according to an embodiment of the training method described above and may then be used after training to determine the control signal for the actuator.

Embodiments of the invention will be discussed with reference to the following figures in more detail. The figures show:

Figure 1     a training system for training a first neural network;

Figure 2     a training system for training a second neural network;

Figure 3     a control system comprising a classifier controlling an actuator in its environment;

Figure 4     the control system controlling an at least partially autonomous robot;

Figure 5     the control system controlling a manufacturing machine;

Figure 6     the control system controlling an automated personal assistant;

Figure 7     the control system controlling an access control system;

Figure 8     the control system controlling a surveillance system;

Figure 9     the control system controlling an imaging system.

Description of the embodiments

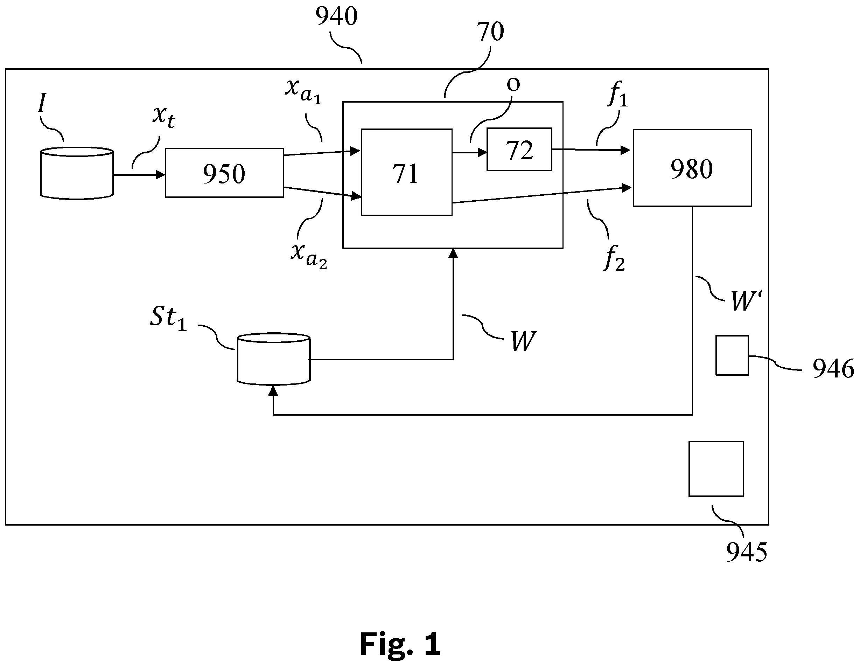

Figure 1 shows an embodiment of a training system (940) for training a first neural network (70). For training, a training data unit (950) accesses a computer-implemented database ($I$) comprising images. The training data unit (150) determines from database ($I$) preferably randomly at least one training image ($x_t$). Based on the training images ($x_t$) the training data unit (950) determines a first transformed image ($x_{a_1}$) by augmenting the training image ($x_t$) according to a first transformation characterizing an augmentation. The first transformation may be determined randomly from a plurality of augmentations and a plurality of parametrizations of such augmentations. Additionally, the training data unit (950) determines a second transformed image ($x_{a_2}$) according to a second transformation characterizing an augmentation. The second transformation may also be determined randomly from a plurality of augmentations and a plurality of parametrizations of such augmentations.

The first transformed image ($x_{a_1}$) and the second transformed image ($x_{a_2}$) are then used as input of an encoder (71) of the neural network. Preferably, the encoder comprises a convolutional neural network, e.g., a residual neural network, followed by a plurality of 1x1 convolutional layers. An output of the encoder for the second transformed image ($x_{a_2}$) is then provided as second feature map ($f_2$) from the first neural network (70). An output (o) of the encoder (71) for the first transformed image ($x_{a_1}$) is provided as input to a predictor (72) of the first neural network (70). The predictor (72) is preferably a convolutional neural network comprising a plurality of 1x1 convolutional layers. An output of the predictor (72) for the output (o) is then provided as first feature map ($f_1$) from the first neural network (70).

The first feature map ($f_1$) and the second feature map ($f_2$) are transmitted to a modification unit (980).

Based on the first feature map ($f_1$) and the second feature map ($f_2$), the modification unit (980) then determines new parameters (W') for the neural network (70). For this purpose, the modification unit (980) compares the first feature map ($f_1$) and the second feature map ($f_2$) using a loss function. Preferably, the loss function comprises a plurality of first loss values, wherein a first loss value is determined for a feature vector of the first feature map. The first loss value may preferably be determined according to a cosine similarity. Preferably, the first loss value is characterized by the formula:

$$L = -\frac{p}{\|p\|_2} \cdot \frac{\sum_m^R IOU(z_m, p)z_m}{\|\sum_m^R IOU(z_m, p)z_m\|_2} \cdot J(p),$$

$$J(p) = \begin{cases} 1 \ if \ \sum_m^R IOU(z_m, p) \geq T \\ 0 \ otherwise \end{cases},$$

wherein $p$ is the first feature vector, $z_m$ is the $m$-th feature vector of the second feature map, $R$ is the number of feature vectors in the second feature map, $T$ is a predefined threshold and $IOU$ is a function that determines the intersection over union of the parts of the training image characterized by a supplied first feature vector and a supplied second feature vector.

The first loss values may be aggregated into a single loss value by means of a sum operation or a mean operation. Based on the single loss value, the modification unit (180) may then determine the new parameters (W') based on, e.g., a backpropagation algorithm using automatic differentiation.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters (W') determined in a previous iteration are used as parameters (W) of the first neural network (70).

Furthermore, the training system (940) may comprise at least one processor (945) and at least one machine-readable storage medium (946) containing instructions which, when executed by the processor (945), cause the training system (940) to execute a training method according to one of the aspects of the invention.

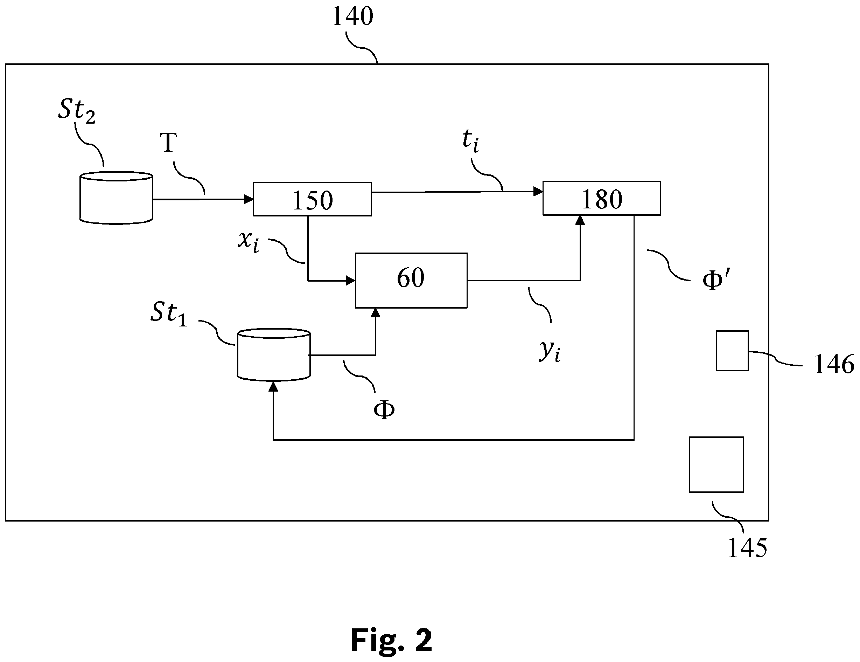

Figure 2 shows an embodiment of a training system (140) for training a second neural network (60) training data set (T). Before training, the second neural network (60) is initialized such that it comprises layers and respective parameters (W) of the first neural network. The training system (140) may hence be understood as performing a finetuning of the first neural network (60) with respect to the training dataset (T).

The training data set (T) comprises a plurality of input signals ($x_i$) which are used for training the second neural network (60), wherein the training data set (T) further comprises, for each input signal ($x_i$), a desired output signal ($t_i$) which corresponds to the input signal ($x_i$) and characterizes a classification of the input signal ($x_i$).

For training, a training data unit (150) accesses a computer-implemented database (St_2), the database

($St_2$) providing the training data set (T). The training data unit (150) determines from the training data set (T) preferably randomly at least one input signal ($x_i$) and the desired output signal ($t_i$) corresponding to the input signal ($x_i$) and transmits the input signal ($x_i$) to the second neural network (60). The second neural network (60) determines an output signal ($y_i$) based on the input signal ($x_i$).

The desired output signal ($t_i$) and the determined output signal ($y_i$) are transmitted to a modification unit (180).

Based on the desired output signal ($t_i$) and the determined output signal ($y_i$), the modification unit (180) then determines new parameters ($\Phi'$) for the second neural network (60). For this purpose, the modification unit (180) compares the desired output signal ($t_i$) and the determined output signal ($y_i$) using a loss function. The loss function determines a first loss value that characterizes how far the determined output signal ($y_i$) deviates from the desired output signal ($t_i$). In the given embodiment, a negative log-likehood function is used as the loss function. Other loss functions are also conceivable in alternative embodiments.

Furthermore, it is conceivable that the determined output signal ($y_i$) and the desired output signal ($t_i$) each comprise a plurality of sub-signals, for example in the form of tensors, wherein a sub-signal of the desired output signal ($t_i$) corresponds to a sub-signal of the determined output signal ($y_i$). It is conceivable, for example, that the second neural network (60) is configured for object detection and a first sub-signal characterizes a probability of occurrence of an object with respect to a part of the input signal ($x_i$) and a second sub-signal characterizes the exact position of the object. If the determined output signal ($y_i$) and the desired output signal ($t_i$) comprise a plurality of corresponding sub-signals, a second loss value is preferably determined for each corresponding sub-signal by means of a suitable loss function and the determined second loss values are suitably combined to form the first loss value, for example by means of a weighted sum.

The modification unit (180) determines the new parameters ($\Phi'$) based on the first loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters ($\Phi'$) determined in a previous iteration are used as parameters ($\Phi$) of the second neural network (60).

Furthermore, the training system (140) may comprise at least one processor (145) and at least one machine-readable storage medium (146) containing instructions which, when executed by the processor (145), cause the training system (140) to execute a training method according to one of the aspects of the invention.

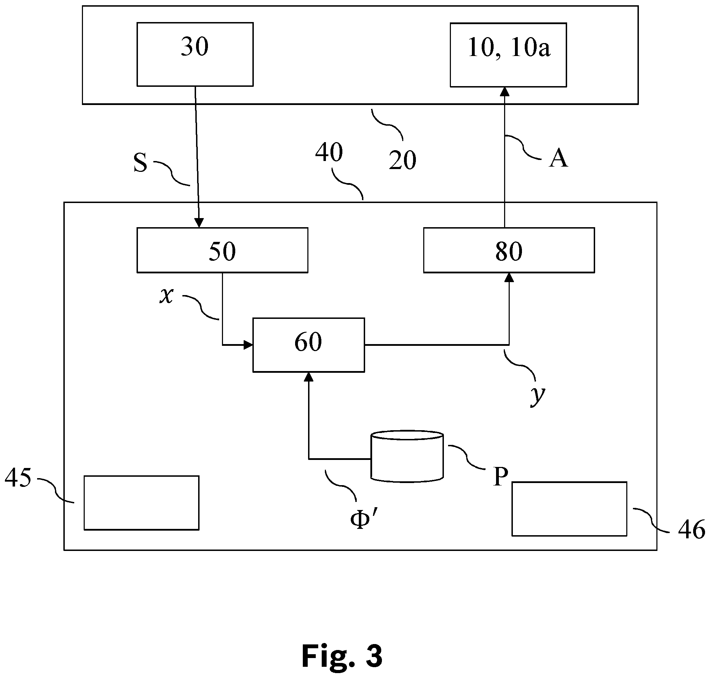

Figure 3 shows an embodiment of an actuator (10) in its environment (20). The actuator (10) interacts with a control system (40). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input signals (x). Alternatively, in case of no receiving unit (50), each sensor signal (S) may directly be taken as an input signal (x). The input signal (x) may, for example, be given as an excerpt from the sensor signal (S). Alternatively, the sensor signal (S) may be processed to yield the input signal (x). In other words, the input signal (x) is provided in accordance with the sensor signal (S).

The input signal (x) is then passed on to the second neural network (60).

The second neural network (60) is parametrized by parameters ($\Phi$), which are stored in and provided by a parameter storage ($St_1$).

The second neural network (60) determines an output signal (y) from the input signals (x). The output signal (y) comprises information that assigns one or more labels to the input signal (x). The output signal (y) is transmitted to an optional conversion unit (80), which converts the output signal (y) into the control signals (A). The control signals (A) are then transmitted to the actuator (10) for controlling the actuator (10) accordingly. Alternatively, the output signal (y) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

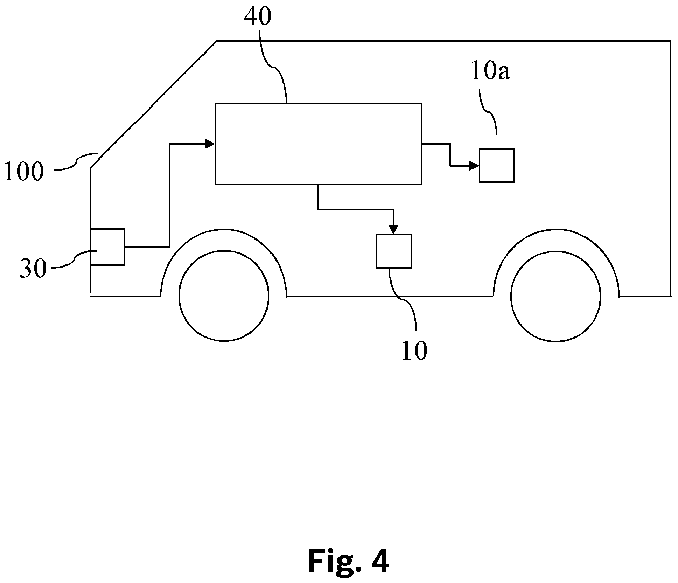

Figure 4 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100). The input signal (x) may hence be understood as an input image and the second neural network (60) as an image classifier.

The image classifier (60) may be configured to detect objects in the vicinity of the at least partially autonomous robot based on the input image (x). The output signal (y) may comprise an information, which characterizes where objects are located in the vicinity of the at least partially autonomous robot. The control signal (A) may then be determined in accordance with this information, for example to avoid collisions with the detected objects.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the image classifier (60) deems them most likely to be, e.g., pedestrians or trees, and the control signal (A) may be determined depending on the classification.

Alternatively or additionally, the control signal (A) may also be used to control the display (10a), e.g., for displaying the objects detected by the image classifier (60). It can also be imagined that the control signal (A) may control the display (10a) such that it produces a warning signal if the vehicle (100) is close to colliding with at least one of the detected objects. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving, or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, a control signal (A) may be determined to cause the actuator (10) to spray the plants with a suitable quantity of suitable liquids and/or cut the plants.

In even further embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

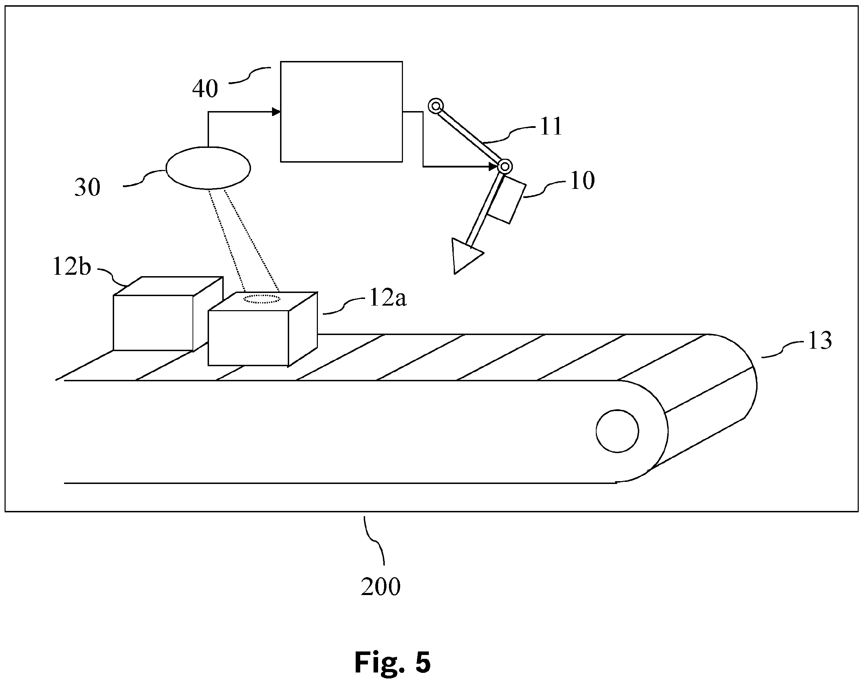

Figure 5 shows an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12). The second neural network (60) may hence be understood as an image classifier.

The image classifier (60) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the image classifier (60) classifies, whether the manufactured product is broken or exhibits a defect. The actuator (10) may then be controlled as to remove the manufactured product from the transportation device.

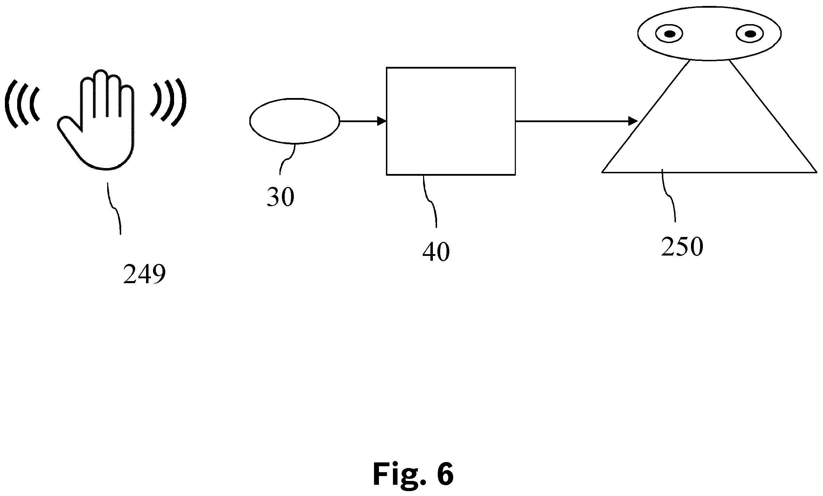

Figure 6 shows an embodiment in which the control system (40) is used for controlling an automated personal assistant (250). The sensor (30) may be an optic sensor, e.g., for receiving video images of a gestures of a user (249). Alternatively, the sensor (30) may also be an audio sensor, e.g., for receiving a voice command of the user (249).

The control system (40) then determines control signals (A) for controlling the automated personal assistant (250). The control signals (A) are determined in accordance with the sensor signal (S) of the sensor (30). The sensor signal (S) is transmitted to the control system (40). For example, the second neural network (60) may be configured to, e.g., carry out a gesture recognition algorithm to identify a gesture made by the user (249). The control system (40) may then determine a control signal (A) for transmission to the automated personal assistant (250). It then transmits the control signal (A) to the automated personal assistant (250).

For example, the control signal (A) may be determined in accordance with the identified user gesture recognized by the second neural network (60). It may comprise information that causes the automated personal assistant (250) to retrieve information from a database and output this retrieved information in a form suitable for reception by the user (249).

In further embodiments, it may be envisioned that instead of the automated personal assistant (250), the control system (40) controls a domestic appliance (not shown) controlled in accordance with the identified user gesture. The domestic appliance may be a washing machine, a stove, an oven, a microwave, or a dishwasher.

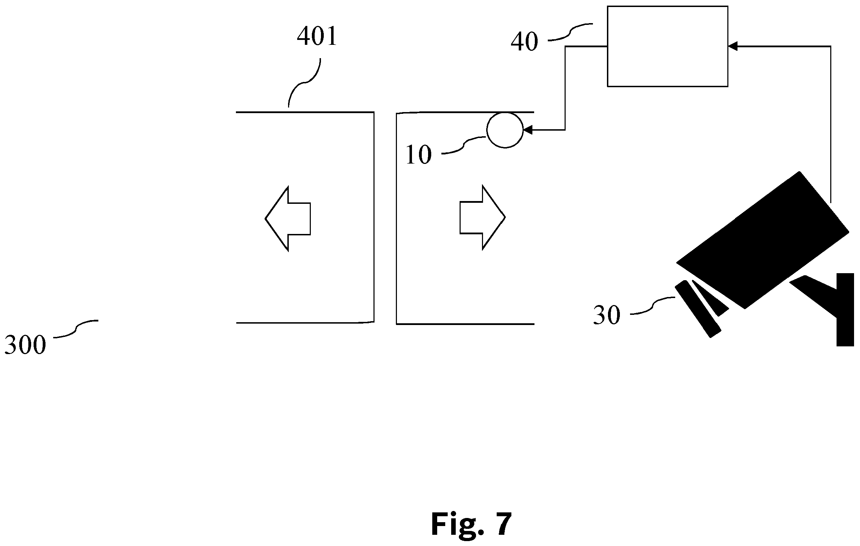

Figure 7 shows an embodiment in which the control system (40) controls an access control system (300). The access control system (300) may be designed to physically control access. It may, for example, comprise a door (401). The sensor (30) can be configured to detect a scene that is relevant for deciding whether access is to be granted or not. It may, for example, be an optical sensor for providing image or video data, e.g., for detecting a person's face. The second neural network (60) may hence be understood as an image classifier.

The image classifier (60) may be configured to classify an identity of the person, e.g., by matching the detected face of the person with other faces of known persons stored in a database, thereby determining an identity of the person. The control signal (A) may then be determined depending on the classification of the image classifier (60), e.g., in accordance with the determined identity. The actuator (10) may be a lock which opens or closes the door depending on the control signal (A). Alternatively, the access control system (300) may be a non-physical, logical access control system. In this case, the control signal may be used to control the display (10a) to show information about the person's identity and/or whether the person is to be given access.

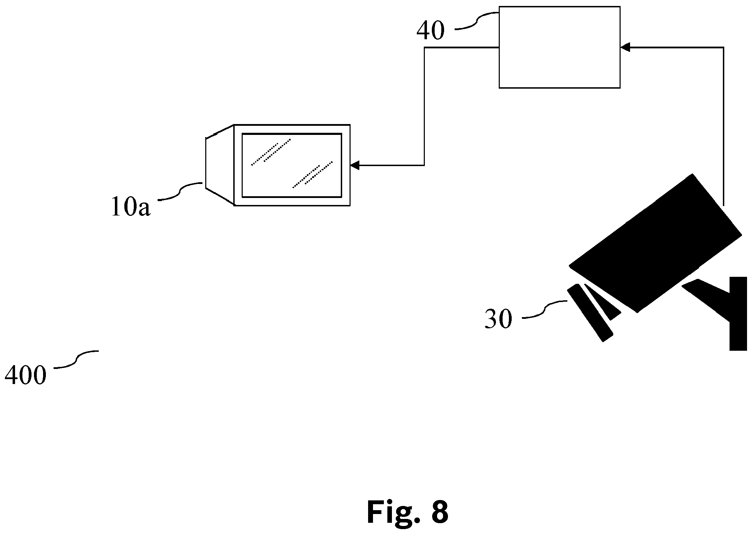

Figure 8 shows an embodiment in which the control system (40) controls a surveillance system (400). This embodiment is largely identical to the embodiment shown in figure 5. Therefore, only the differing aspects will be described in detail. The sensor (30) is configured to detect a scene that is under surveillance. The control system (40) does not necessarily control an actuator (10) but may alternatively control a display (10a). For example, the image classifier (60) may determine a classification of a scene, e.g., whether the scene detected by an optical sensor (30) is normal or whether the scene exhibits an anomaly. The control signal (A), which is transmitted to the display (10a), may then, for example, be configured to cause the display (10a) to adjust the displayed content dependent on the determined classification, e.g., to highlight an object that is deemed anomalous by the image classifier (60).

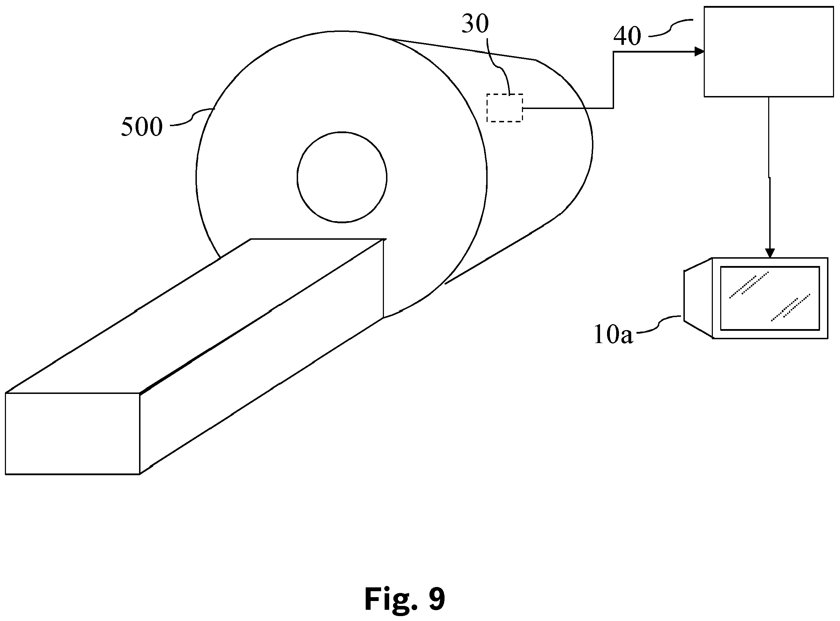

Figure 9 shows an embodiment of a medical imaging system (500) controlled by the control system (40). The imaging system may, for example, be an MRI apparatus, x-ray imaging apparatus or ultrasonic imaging apparatus. The sensor (30) may, for example, be an imaging sensor which takes at least one image of a patient, e.g., displaying different types of body tissue of the patient.

The second neural network (60) may then determine a classification of at least a part of the sensed image. The at least part of the image is hence used as input image (x) to the second neural network (60). The second neural network (60) may hence be understood as an image classifier.

The control signal (A) may then be chosen in accordance with the classification, thereby controlling a display (10a). For example, the image classifier (60) may be configured to detect different types of tissue in the sensed image, e.g., by classifying the tissue displayed in the image into either malignant or benign tissue. This may be done by means of a semantic segmentation of the input image (x) by the image classifier (60). The control signal (A) may then be determined to cause the display (10a) to display different tissues, e.g., by displaying the input image (x) and coloring different regions of identical tissue types in a same color.

In further embodiments (not shown) the imaging system (500) may be used for non-medical purposes, e.g., to determine material properties of a workpiece. In these embodiments, the image classifier (60) may be configured to receive an input image (x) of at least a part of the workpiece and perform a semantic segmentation of the input image (x), thereby classifying the material properties of the workpiece. The control signal (A) may then be determined to cause the display (10a) to display the input image (x) as well as information about the detected material properties.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises $N$ elements, wherein $N$ is the number of elements in the plurality, the elements are assigned the integers from 1 to $N$. It may also be understood that elements of the plurality can be accessed by their index.

## Claims

1. Computer-implemented method for training a neural network (70), wherein the neural network (70) is configured for image analysis and wherein training comprises the steps of:

   • Determining a first feature map ($f_1$) by the neural network (70) based on a first transformed image ($x_{a_1}$), wherein the first transformed image ($x_{a_1}$) is determined based on a first transformation of a training image ($x_i$);
   • Determining a second feature map ($f_2$) by the neural network (70) based on a second transformed image ($x_{a_2}$), wherein the second transformed image ($x_{a_2}$) is determined based on a second transformation of the training image ($x_i$);
   • Determining a first loss value characterizing a metric between a first feature vector of the first feature map ($f_1$) and a weighted sum of second feature vectors of the second feature map ($f_2$), wherein weights of the weighted sum are determined according to overlaps of a part of the training image ($x_i$) **characterized by** the first feature vector with respect to parts of the training image ($x_i$) **characterized by** the respective second feature vectors;
   • Training the neural network (70) based on the first loss value.

2. Method according to claim 1, wherein the first transformation and/or the second transformation characterizes an augmentation of the training image ($x_i$).

3. Method according to claim 1 or 2, wherein a weight of the weighted sum characterizes an intersection over union of the part of the training image ($x_i$) **characterized by** the first feature vector and a part of the training image ($x_i$) **characterized by** a second feature vector.

4. Method according to any one of the claims 1 to 3, wherein the first loss value is set to zero if a sum of overlaps of the part of the training image ($x_i$) **characterized by** the first feature vector with respect to the parts of the training image ($x_i$) **characterized by** the respective second feature vectors is less than or equal to a predefined threshold.

5. Method according to any one of the claims 1 to 4, wherein the neural network (70) comprises an encoder (71) and a predictor (72), wherein the second feature map is ($f_2$) a second output of the encoder (71) for the second transformed image $(x_{a_2})$ and the first feature map $(f_1)$ is an output of the predictor (72) determined for a first output $(o)$ of the encoder (71) for the first transformed image $(x_{a_1})$.

6. Method according to any one of the claims 1 to 5, wherein the metric characterizes a cosine similarity.

7. Method according to any one of the claims 1 to 6, wherein for each first feature vector from a plurality of first feature vectors of the first feature map $(f_1)$ a respective first loss value is determined, thereby determining a plurality of first loss values.

8. Method according to any one of the claims 1 to 7, wherein the neural network (70) is trained based on the first loss or a sum of the plurality of first loss values or a mean of the plurality of first loss value by means of a gradient descent algorithm, wherein gradients of parameters $(W)$ of the neural network (70) are determined with respect to the first loss value or with respect to the sum of the plurality of first loss values or with respect to the mean of the plurality of first loss values.

9. Method according to claim 8, wherein a gradient of the first loss value with respect to a second feature vector or a gradient of the sum of the plurality of first loss values with respect to a second feature vector or a gradient of the mean of the plurality of first loss values with respect to a second feature vector is not backpropagated through the neural network (70).

10. Computer-implemented method for determining a control signal $(A)$ of an actuator (10), wherein the control signal is determined based on an output signal $(y)$ of a neural network (60), wherein the neural network (60) comprises at least one layer and wherein parameters $(\Phi)$ of the layer have been trained with a training method according to any one of the claims 1 to 9.

11. Method according to claim 10, wherein the actuator is part of a robot (100), a manufacturing machine (200), an automated personal assistant (250), an access control system (300), a surveillance system (400), or an imaging system (500).

12. Training system (940), which is configured to carry out the training method according to any one of the claims 1 to 9.

13. Computer program that is configured to cause a computer to carry out the method according to any one of the claims 1 to 11 with all of its steps if the computer program is carried out by a processor (45, 145, 945).

14. Machine-readable storage medium (46, 146, 946) on which the computer program according to claim 13 is stored.

**Fig. 1**

**Fig. 2**

EP 4 145 402 A1

**Fig. 3**

**Fig. 4**

**Fig. 5**

**Fig. 6**

EP 4 145 402 A1

Fig. 7

40

10a

30

400

**Fig. 8**

**Fig. 9**

Europäisches
Patentamt

European
Patent Office

Office européen
des brevets

# EUROPEAN SEARCH REPORT

**Application Number**

**EP 21 19 4957**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XINGHAO ZHU ET AL: "6-DoF Contrastive Grasp Proposal Network", ARXIV.ORG, CORNELL UNIVERSITY LIBRARY, 201 OLIN LIBRARY CORNELL UNIVERSITY ITHACA, NY 14853, 7 May 2021 (2021-05-07), XP081954654, * abstract * * figure 3 * * page 2, the right-hand column, the last paragraph, starting "1) Training Phase [...]" * * page 3, the right-hand column, the first paragraph, starting "Third, a rotated region proposal network (RRPN) is introduced to propose 3-DoF grasp regions base on the feature map q"; page 4, the left-hand column, section "C. Rotated Region Proposal" * * page 4, the right-hand column, section "E. Loss Design", the first item "1) Region Proposal Loss" * * page 4, the right-hand column, the last paragraph, starting "The overall loss function used to train the contrastive grasp proposal mode [...]" * | 1-14 | INV. G06V10/82 G06N3/04 G06V20/00 G06V10/25 |
| A | WEI RAN ET AL: "A Robust and Effective Text Detector Supervised by Contrastive Learning", IEEE ACCESS, IEEE, USA, vol. 9, 4 February 2021 (2021-02-04), pages 26431-26441, XP011837650, DOI: 10.1109/ACCESS.2021.3057108 [retrieved on 2021-02-12] * abstract * * figure 1 * * page 3 - page 5 * | 1-14 | |

-----

-/--

TECHNICAL FIELDS
SEARCHED (IPC)

G06V
G06N

The present search report has been drawn up for all claims

| Place of search | Date of completion of the search | Examiner |
|---|---|---|
| The Hague | 9 February 2022 | Natanni, Francesco |

EPO FORM 1503 03.82 (P04C01)

**page 1 of 2**

Europäisches
Patentamt

European
Patent Office

Office européen
des brevets

# EUROPEAN SEARCH REPORT

Application Number

EP 21 19 4957

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIAHAO XIE ET AL: "Unsupervised Object-Level Representation Learning from Scene Images", ARXIV.ORG, CORNELL UNIVERSITY LIBRARY, 201 OLIN LIBRARY CORNELL UNIVERSITY ITHACA, NY 14853, 22 June 2021 (2021-06-22), XP081993882, * abstract * * page 4 - page 5 * * figure 2 * | 1-14 | |
| A | TETE XIAO ET AL: "Region Similarity Representation Learning", ARXIV.ORG, CORNELL UNIVERSITY LIBRARY, 201 OLIN LIBRARY CORNELL UNIVERSITY ITHACA, NY 14853, 24 March 2021 (2021-03-24), XP081915138, * abstract * * figures 1, 2 * * page 3 - page 5 * | 1-14 | |
|  |  |  | **TECHNICAL FIELDS SEARCHED (IPC)** |

The present search report has been drawn up for all claims

| Place of search | Date of completion of the search | Examiner |
|---|---|---|
| The Hague | 9 February 2022 | Natanni, Francesco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 2 of 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHEN ; HE.** *Exploring Simple Siamese Representation Learning,* 20 November 2020, https://arxiv.org/abs/2011.10566v1